Europäisches Patentamt

(19) European Patent Office (11) Veröffentlichungsnummer: **0 081 715**

Office européen des brevets **B1**

(12) **EUROPÄISCHE PATENTSCHRIFT**

(45) Veröffentlichungstag der Patentschrift:
23.07.86

(21) Anmeldenummer: 82110889.1

(22) Anmeldetag: 25.11.82

(51) Int. Cl.⁴: **B 01 D 25/12**

(54) **Membranfilterplatte.**

(30) Priorität: 15.12.81 DE 3149665
04.06.82 DE 3221249
20.11.82 DE 3242917

(43) Veröffentlichungstag der Anmeldung:
22.06.83 Patentblatt 83/25

(45) Bekanntmachung des Hinweises auf die Patenterteilung:
23.07.86 Patentblatt 86/30

(84) Benannte Vertragsstaaten:
AT BE CH DE FR GB IT LI

(56) Entgegenhaltungen:
CH-A-494 583
DE-A-2 328 865
DE-A-2 652 062
DE-A-2 712 753
DE-A-2 933 096

(73) Patentinhaber: **Klinkau & Co. GmbH,
Raiffeisenstrasse 6, D-8952 Marktoberdorf-
Leuterschach (DE)**

(72) Erfinder: **Der Erfinder hat auf seine Nennung
verzichtet**

(74) Vertreter: **Goddar, Heinz J., Dr., FORRESTER &
BOEHMERT Widenmayerstrasse 4/I, D-8000
München 22 (DE)**

## Beschreibung

Die Erfindung betrifft eine Membranfilterplatte nach dem Oberbegriff der Patentansprüche 1, 14 und/oder 16.

Eine Schwierigkeit besteht bei den bislang verwendeten Membranfilterplatten darin, daß die mechanische Beanspruchung der Membran bei den wechselnden Druckbeanspruchungen der vorstehend beschriebenen Art außerordentlich hoch ist, so daß es leicht zu einem Bruch der Membran nahe der Verbindungslinie mit dem Dichtrand kommen kann. Dieser Nachteil wiegt umso schwerer, als es bei der bislang weitestgehend gehandhabten einstückigen Ausbildung der Membran mit dem Dichtrand und der Trägerplatte nicht möglich ist, die Materialeigenschaften der Membran unabhängig von den an die Trägerplatte und den Dichtrand zu stellenden Anforderungen auf hohe Biegefestigkeit bzw. Flexibilität etc. zu optimieren.

Aus der DE-A-2 933 096 ist eine Membranfilterplatte der eingangs genannten Art bekannt, bei der die Auslenkung der Membran in der Filtrations- wie in der Abpreßphase durch Biegung um eine einzige, scharnierartige Sollbiegelinie erfolgt. Hierdurch treten beträchtliche Materialbeanspruchungen auf, die zu frühzeitigen Ermüdungserscheinungen führen können.

Der Erfindung liegt die Aufgabe zugrunde, eine Membranfilterplatte der eingangs genannten Art zu schaffen, deren Membran gegenüber den bislang verwendeten eine wesentlich verbesserte Lebensdauer aufweist, wobei es weiterhin bevorzugt möglich sein soll, die Materialeigenschaften der einzelnen Bauelemente der Membranfilterplatte, insbesondere der Membran selbst, im Hinblick auf den jeweiligen Anwendungszweck zu optimieren.

Erfindungsgemäß wird diese Aufgabe bei einer Membranfilterplatte nach dem Oberbegriff des Patentanspruches 1 durch die im Kennzeichen des Patentanspruches 1 aufgeführten Merkmale gelöst. Unter anderem Aspekt wird die der Erfindung zugrundeliegende Aufgabe bei einer Membranfilterplatte nach dem Oberbegriff des Patentanspruches 14 durch die im Kennzeichen des Patentanspruches 14 aufgeführten Merkmale gelöst, wobei ein Distanznocken als solcher für Filterplatten, der in der Filterplattenmitte in etwa zentral angeordnet ist, bereits aus der CH-A-494 583 bekannt ist. Nach einem anderen Aspekt der Erfindung wird die zugrundeliegende Aufgabe bei einer Membranfilterplatte nach dem Oberbegriff des Patentanspruches 16 durch die im Kennzeichen des Patentanspruches 16 enthaltenen Merkmale gelöst, wobei darauf hingewiesen sei, daß in der DE-A-26 52 062 bereits Membranfilterplatten mit Zentraleinlauf als solche beschrieben sind.

Besonders bevorzugte Ausführungsformen der Erfindung sind Gegenstand der jeweils auf die Patentansprüche 1, 14 und/oder 16 zurückbezogenen Unteransprüche.

Die erfindungsgemäß vorgeschlagene Membranfilterplatte kann aus einer Vielzahl geeigneter Werkstoffe hergestellt werden. Beispielsweise kann die Trägerplatte in vorteilhafter Weise aus Polypropylen hergestellt werden, ebenso wie dieses Material auch sehr gut für den Dichtrandrahmen geeignet ist. Wegen der notwendigen Toleranzanforderungen scheiden allerdings schwer bearbeitbare Materialien in der Regel aus, in dem Fall nämlich, in dem die erforderlichen Toleranzanforderungen nur durch eine mechanische Nacharbeit erreicht werden könnten. Auch Hartschaumstoffe lassen sich zusätzlich zu herkömmlichen, für derartige Bauteile bekannten Thermoplasten in vorteilhafter Weise verwenden.

Werden thermoplastische Kunststoffe eingesetzt, so läßt sich das Umformverfahren in vorteilhafter Weise zur Herstellung von Membranfilterplatten der erfindungsgemäßen Art verwenden. Die bei verschiedenen Ausführungsformen verwendeten Dübel lassen sich ebenfalls aus einer Vielzahl von Werkstoffen herstellen, wobei die Aufgabe der Dübel einmal im Zusammenhalt und der maßlichen Fixierung der jeweiligen Einzelteile besteht, zum anderen aber auch darin, bestimmte Kräfte aufzunehmen, so wie beispielsweise die im wesentlichen senkrecht zur Trägerplattenmittelebene verlaufenden Randdübel die Aufgabe haben, die auf die kammerseitige Schräge des Dichtrandes wirkende Innenkraft (Filtrationsdruck), soweit diese Kraftkomponente nicht durch die Reibungskraft in Dichtrandbereich, also durch den Schließdruck, ausgeglichen werden kann, auf die Trägerplatte zu übertragen, damit ein Ausbiegen des Dichtrandes verhindert wird. Die erforderliche Anzahl sowie die Dimensionierung der Dübel, auch letzten Endes die Teilung und das Dübelmaterial, ergeben sich in für den Fachmann ohne weiteres ersichtlicher Weise aus den jeweiligen konstruktiven Voraussetzungen.

Auch bei Verwendung an sich verschweißbarer Membranfilterplatten, bei denen alle Bauteile aus Polypropylen oder dergleichen bestehen, empfiehlt es sich aus Kostengründen, gegebenenfalls lediglich eine lokale Verschweißung, beispielsweise im Eckenbereich der Membranfilterplatten, vorzugsweise lediglich im Bereich der Eckbohrungen, vorzusehen, wobei sich beispielsweise das Widerstandsschweißverfahren (mit Kupferdraht-Einlage oder dergleichen) eignet, aber auch die HF-Schweißung.

Wird eine auswechselbare Membran verwendet, so ist es in dem Fall, daß die Membran selbst nicht aus dichtendem Material besteht, wie Gummi, notwendig, in den Ecken, also in der Umgebung der Eckbohrungen, Dichtungen vorzusehen, die im übrigen natürlich auch beispielsweise um die Dübel angeordnet sein können, obwohl dies nicht unbedingt erforderlich ist. Die Dicke der jeweiligen Dichtung entspricht natürlich in etwa dejenigen der Membran, mit einer von der Shore-Härte abhängigen Plustoleranz.

Es sei nochmals hervorgehoben, daß in dem Fall, daß keine Verschweißung verwendet wird, wobei die einzelnen Teile also ausschließlich durch die Dichtranddübel etc. bzw. Halteklammern miteinander zusammengehalten werden, eine freie Auswahl der Werkstoffe für jedes Einzelteil möglich ist. Die Membranen sind dabei auswechselbar. Es ist keine komplizierte Oberflächengestaltung im Dichtrandrahmenbereich vorgesehen, so daß also auch beim Auswechseln der Membran keine Toleranzprobleme auftreten können, sondern stets eine einwandfreie Abdichtung gewährleistet ist. Der Dichtrandrahmen läßt sich im übrigen beispielsweise unter Einsatz thermoplastischer Werkstoffe in bekannten und bewährten Schweißkonstruktionen ausführen. Die Membran läßt sich in dem Fall, daß sie aus thermoplastischem Kunststoff hergestellt werden soll, beispielsweise durch Prägen bzw. Umformen einer Extrudertafel oder auch durch Urformung aus Pulver oder Granulat in der Preßform herstellen. Auch lassen sich Gummimembranen in der erfindungsgemäß vorgesehenen ebenen, unkomplizierten Form ohne weiteres vulkanisieren. Bei entsprechender Berücksichtigung dieser Werkstoffvariante läßt sich ein Formwerkzeug konstruieren, mittels dessen sowohl Membranen aus Kunststoff als auch aus Gummi in nur einer Form herstellbar sind, wodurch die Herstellungskosten der erfindungsgemäßen Membranfilterplatte beträchtlich gesenkt werden können. Trotz ihrer einfachen Form liegt die Membran vollkommen dicht zwischen den Dichtrandrahmen, bedingt durch die maßliche Gestaltung von Dichtrandrahmen und Trägerplatte, wobei zwischen diesen Teilen eine randseitige, umlaufende Auflage ausgebildet ist, auf welcher die Membran rundum aufliegt und welche bewirkt, daß die Membran in der bereits angegebenen und weiter unten noch im einzelnen diskutierten Form zwei separate, jeweils nur für eine Bewegungsrichtung vorgesehene, scharnierartige Bewegungszonen in den betreffenden Sollbiegelienien aufweist.

Weitere Merkmale und Vorteile der Erfindung ergeben sich aus der nachfolgenden Beschreibung, in der Ausführungsbeispiele anhand der Zeichnung im einzelnen erläutert sind. Dabei zeigt:

Fig. 1 ein erstes Ausführungsbeispiel einer Membranfilterplatte nach der Erfindung in der Draufsicht;

Fig. 2 den Dichtrand der Membranfilterplatte von Fig. 1 im Schnitt entlang der Linie II-II von Fig. 1 in stark vergrößerter Darstellung;

Fig. 3 einen Eckbereich der Membranfilterplatte von Fig. 1 und 2 in vergrößerter Darstellung mit Detailwiedergabe der Zu- und Ablaufbohrungen, teilweise geschnitten;

Fig. 4 einen Schnitt entlang der Linie IV-IV von Fig. 3;

Fig. 5 einen Schnitt entlang der Linie V-V von Fig. 3;

Fig. 6 ein abgewandeltes Ausführungsbeispiel der Ausbildung eines Membranfilterplatteneckbereiches in der Draufsicht;

Fig. 7 einen Schnitt durch eine Membranfilterplatte ähnlich der Darstellung von Fig. 4, wobei die Membranbewegung angedeutet ist;

Fig. 8 einen bei der erfindungsgemäßen Membranfilterplatte verwendbaren Dübel in der Seiten- und in der Stirnansicht;

Fig. 9 eine bei der erfindungsgemäßen Membranfilterplatte verwendbare Halteklammer in der Seiten- und in der Vorderansicht;

Fig. 10 einen Stütznocken eines Ausführungsbeispieles der Erfindung im Schnitt senkrecht zu Trägerplattenmittelebene;

Fig. 11 Einen Schnitt durch einen Zentraleinlauf eines Ausführungsbeispieles der Erfindung; und

Fig. 12 einen Schnitt durch ein anderes Ausführungsbeispiel eines Zentraleinlaufes der erfindungsgemäßen Membranfilterplatte.

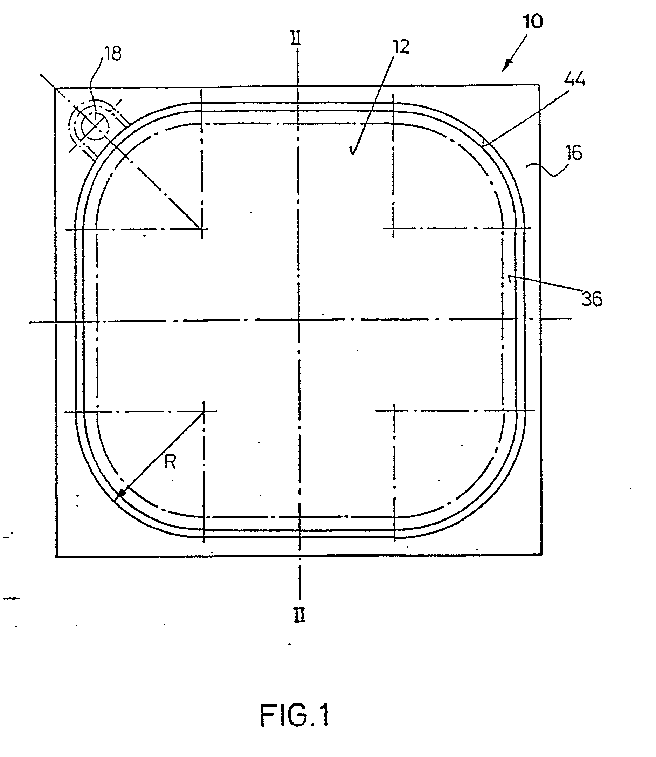

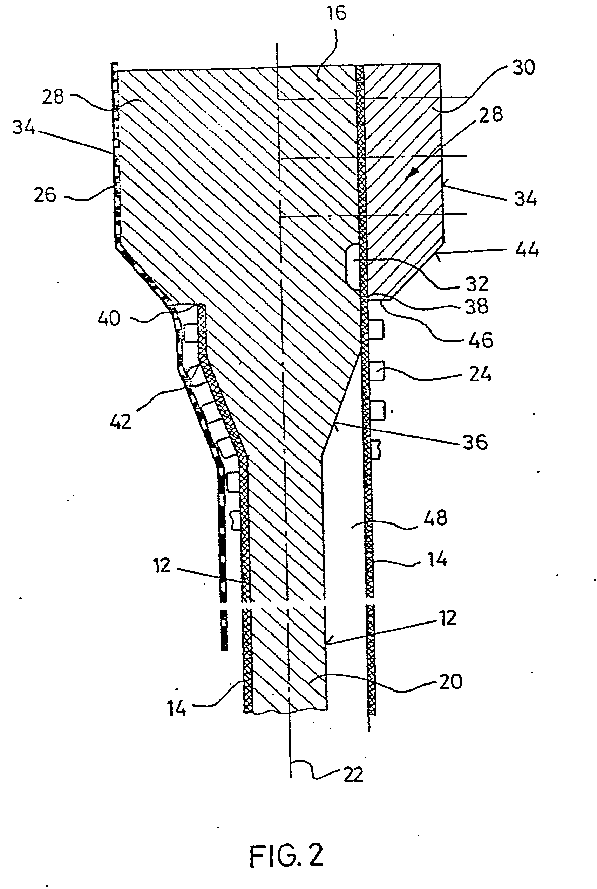

Wie Fig. 1 erkennen läßt weist die dort in der Draufsicht gezeigte Membranfilterplatte 10 in ihrem Zentralbereich eine im wesentlichen ebene Trägerplattenfläche 12 auf, die von einer in Fig. 1 nicht erkennbaren, jedoch in Fig. 2 dargestellten Membran 14 aus flexiblem Material wie Kunststoff, Gummi oder dergleichen, abgedeckt ist, die wiederum im Randbereich 16 der Membranfilterplatte dichtend gehalten ist. Fig. 1 läßt weiterhin erkennen, daß eine Eckeinlaufbohrung 18 vorgesehen ist und daß die vier Schmalseiten der Membran 14 jeweils durch Viertelkreise mit dem Radius R miteinander verbunden sind. Handelt es sich um eine Membranfilterplatte im herkömmlichen Format von 1200 x 1200 mm, so beträgt der Radius R beispielsweise 320 mm.

Wie aus der Detaildarstellung von Fig. 2 hervorgeht, ist beidseits der Trägerplatte 20, deren Längsmittelebene mit 22 bezeichnet ist, jeweils eine der Membranen 14 angeordnet. Aus der Darstellung in Fig. 2, rechts, ist zu ersehen, daß die Membran 14, die an ihrer der Trägerplattenfläche 12 abgewandten Seite mit Distanznocken 24, Distanzrippen oder dergleichen zum Anlegen eines in Fig. 2, links, gezeigten Filtertuches 26 versehen ist, dichtend zwischen dem Bandbereich 16 der Trägerplatte 20 und einem Dichtrandrahmen 28 aufgenommen ist. Die Membran 14 liegt in Fig. 2 im Einbauzustand in ihrer unbelasteten Normalstellung, wobei sie also eine im wesentlichen ebene Tafel bildet. Der Dichtrandrahmen 28 ist bei dem in Fig. 2 rechts gezeigten Ausführungsbeispiel mittels eines Dübels 30 mit dem Randbereich 16 der Trägerplatte 20 verbunden, wobei der Dübel in der ihn aufnehmenden Bohrung mit Klemmsitz aufgenommen ist, hier aber auch verklebt oder verschweißt sein kann, sofern das Material, aus dem die Membran 14 besteht, dies zuläßt. Natürlich wäre auch eine Schraubverbindung zwischen Dichtrandrahmen 28 und Trägerplatte 20 möglich. In Fig. 2, rechts, ist weiterhin zu erkennen, daß der Randbereich 16 der Trägerplatte 20 eine Schweißaustriebsnut 32 aufweist, die dazu bestimmt ist, in dem Fall, daß - wie in Fig. 2, links, vorgesehen - Dichtrandrahmen 28 Membran 14 und Trägerplatte 20 miteinander verschweißt werden, den Schweißaustrieb aufzunehmen. Die Schweißaustriebsnut 32 erfüllt aber auch bei dem in Fig. 2, rechts, gezeigten Ausführungsbeispiel, bei dem keine Verschweißung stattfindet, sondern der Membranrand zwischen Dichtrandrahmen 28 und Randbereich 16 der Trägerplatte 20 dicht eingeklemmt aufgenommen ist, eine wichtige Rolle, indem die Schweißaustriebsnut 32 nämlich die Auflagefläche zwischen Dichtrandrahmen 28 und Randbereich 16 der Trägerplatte 20 verringert und so im eigentlichen Dichtungsbereich, der dort den Dübel 30 umgibt, den Anpreßdruck, der auf die Membran 14 einwirkt, erhöht, wodurch die Dichtwirkung verbessert wird. Die der Trägerplattenmittelebene 22 parallele Umfangsfläche 34 der Dichtrandrahmen 28, an der das Filtertuch 26 anliegt, verläuft im übrigen parallel zur Trägerplattenfläche 12 in einem derartigen Abstand, daß sich beim Zusammenbau einer Serie von Membranfilterplatten der gezeigten Art in Filterpressen das jeweils gewünschte, durch jeweils zwei Membranen 14 bzw. daran anliegende Filtertücher 26 definierte Filterkammervolumen ergibt.

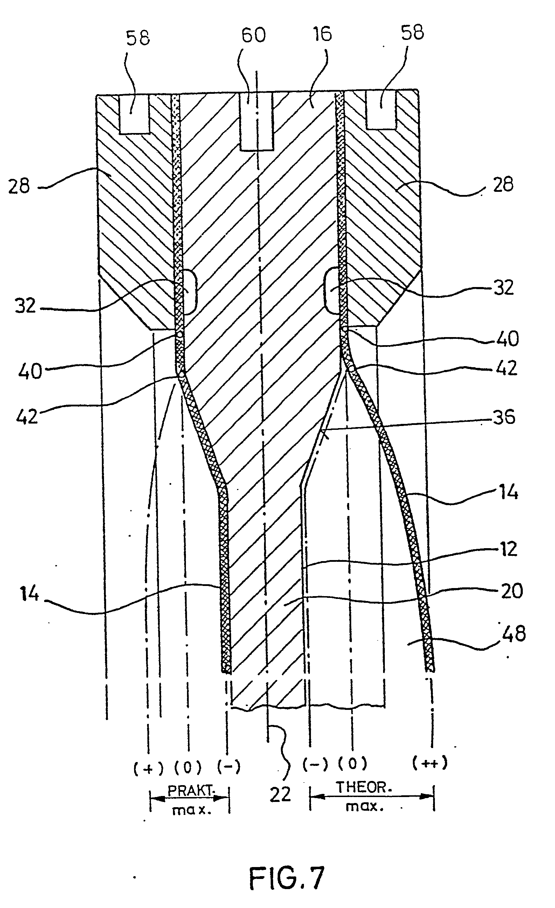

Fig. 2 läßt weiterhin erkennen, daß die der Membran 14 zugewandte Anlagefläche 36 der Trägerplatte 20 von der Verbindungslinie 38 der Membran 14 mit dem Dichtrand aus zur Erzeugung zweier Sollbiegelinien 40, 42 deren Bedeutung weiter unten anhand von Fig. 7 noch im einzelnen erläutert wird, der Membran 14 zunächst im wesentlichen parallel zur Trägerplatten mittelebene 22, dann schräg auf diese hin verlaufend und alsdann über im wesentlichen den gesamten Zentralbereich der Trägerplatte als Trägerplattenfläche 12 parallel zur Trägerplattenmittelebene 22 verlaufend ausgebildet ist. Weiterhin läßt Fig. 2 erkennen daß die der Trägerplattenmittelebene 22 parallele Umfangsfläche 34 des Dichtrandrahmens 28 nahe der Verbindungslinie 38 zwischen der Membran 14 und dem Dichtrandrahmen 28 in Richtung auf das Zentrum der Membranfilterplatte hin an eine schräg in Richtung auf die Trägerplattenmittelebene 22 hin verlaufende Übergangsfläche 44 anschließt, die mit einer Stufe 46 zur Verbindungslinie 38 der Membran 14 mit dem Dichtrandrahmen 28 abfällt. Die Neigung der Übergangsfläche 44 zur Trägerplattemmittelebene 22 ist dabei größer als diejenige des angeschrägten Bereiches der Anlagefläche 36. Die Röhe der Stufe 46 entspricht im wesentlichen derjenigen der Distanznocken 24, so daß also das Filtertuch 26 in der in Fig. 2, links. gezeigten Stellung der Membran 14, die der sogenannten Filtrationsphase entspricht, bei der also die zwischen Membran 14 und Trägerplattenfläche 12 liegende Membrankammer 48 drucklos ist und daher in der in Fig. 2, links, gezeigten Weise ein gegen Null gehendes Volumen aufweist, während die nicht gezeigte, in Fig. 2 links des Filtertuches 26 liegende Filterkammer mit unter Druck stehendem zu filternden Medium beaufschlagt ist, von der Übergangsfläche 44 aus im wesentlichen parallel zur Anlagefläche 36 ohne Stufe in Richtung auf den Zentralbereich der Membranfilterplatte verläuft. Angemerkt sei im übrigen noch, daß die Trennebene zwischen dem Dichtrandrahmen 28 und der Randbereich 16 der Trägerplatte 20 ausweislich Fig. 2 naturlich im wesentlichen in der Ebene der Membran 14 in deren unbelasteter Normalstellung liegt.

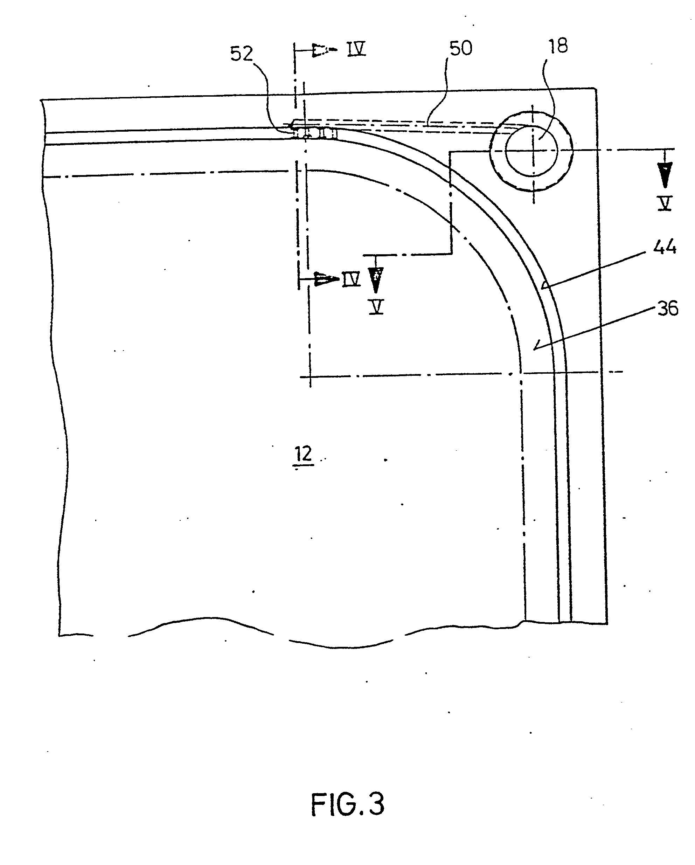

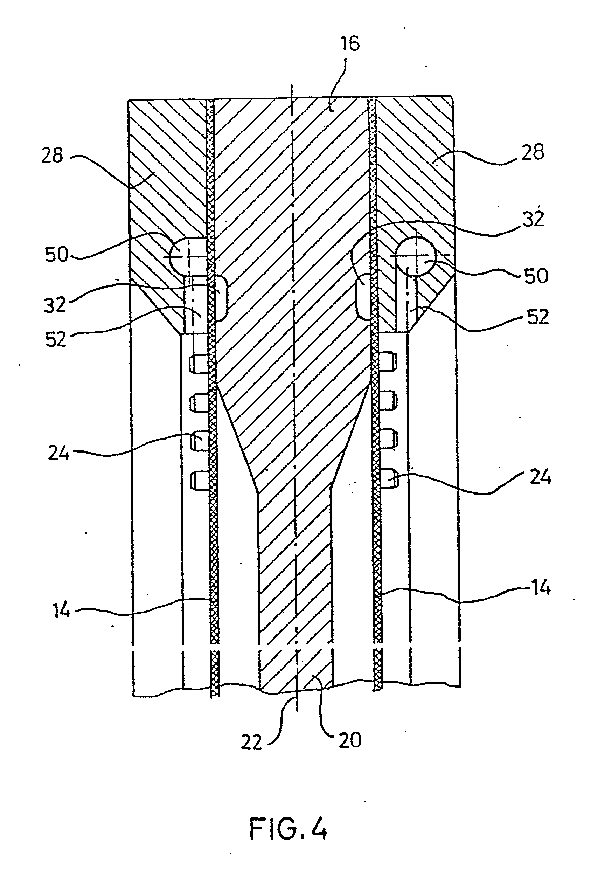

Fig. 3 zeigt den Eckbereich einer Membranfilterplatte mit Zu- bzw. Ablaufbohrungen. Dabei ist erkennbar, daß eine Eckeinlaufbohrung 18 über einen Kanal 50 mit einer Reihe von Querbohrungen 52 in Verbindung steht, die, wie Fig. 4 erkennen läßt, mit der jeweiligen Filterkammer kommunizieren. Der Kanal 50 ist bei dem in Fig. 4 links gezeigten Ausführungsrungsbeispiel in die Oberfläche des Dichtrandrahmens 28 eingefräst, ebenso wie die Querbohrungen 52 zu der der Membran 14 zugewandten Dichtfläche des Dichtrandrahmens 28 hin offen sind. Hierdurch ergibt sich eine besonders leichte Bearbeitungsmöglichkeit, weil die seitlichen Enden der Kanäle 50 bei der Herstellung des Dichtrandrahmens 28 von vornherein verschlossen gehalten werden können, wodurch die Notwendigkeit eines nachfolgenden Auffüllens durch Verschweißen oder dergleichen entfällt. Allerdings läßt sich die offene Kanalausbildung gemäß Fig. 4, links, nur dann verwenden, wenn der Dichtrandrahmen 28 nicht mit der Trägerplatte 20 verschweißt wird, da natürlich ansonsten die entsprechenden Kanäle bzw. Bohrungen oder Nuten leicht verschmieren könnten.

Demgegenüber sind der Kanal 50 und die Querbohrungen 52 bei dem in Fig. 4, rechts, gezeigten Ausführungsbeispiel in das Material des Dichtrandrahmens 28 eingearbeitet, so daß bei dieser Ausführungsform auch eine leichte Verschweißbarkeit gegeben ist. Eine Verschweißung scheidet natürlich ohnehin aus, sofern die Membran 14 aus Gummi oder dergleichen besteht, so daß sich also das Ausführungsbeispiel gemäß Fig. 4, links, insbesondere dann eignet, wenn eine derartige Membran aus Gummi, Silikonkautschuk oder dergleichen verwendet wird. Demgegenüber empfiehlt sich die Ausführungsform gemäß Fig. 4, rechts insbesondere dann, wenn eine Membran aus schweißbarem Material beispielsweise Polypropylen, eingesetzt wird.

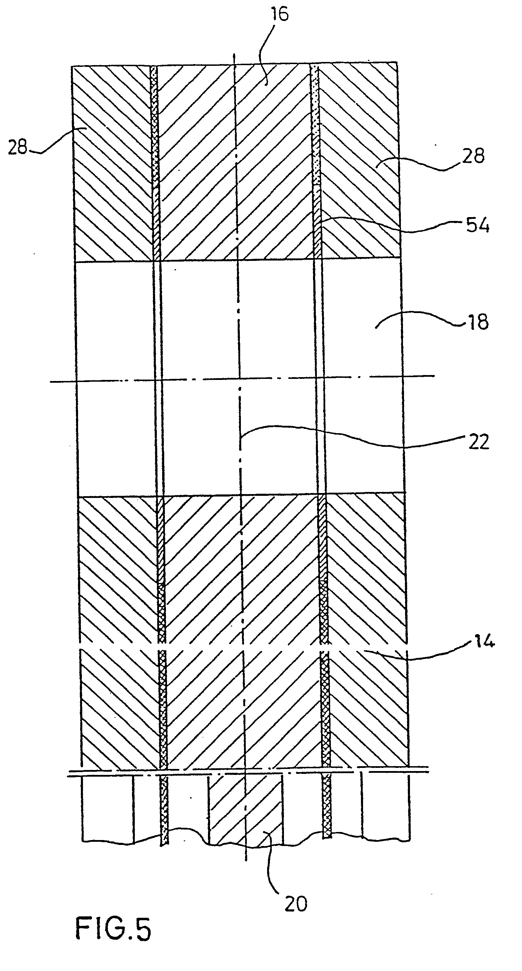

Fig. 5 zeigt eine Eckeinlaufbohrung 18 der bereits diskutierten Art, bei welcher die eigentliche Bohrung von einer Ringdichtung 54 aus dichtendem Material umgeben ist. Diese Ausführungsform empfiehlt sich dann, wemn die Membran 14 nicht aus selbstdichtendem Material besteht, beispielsweise also dann, wenn die Membran 14 ebenso wie die Trägerplatte 20 bzw. die Dichtrandrahmen 28 aus Kunststoff, wie Polypropylen oder dergleichen, besteht.

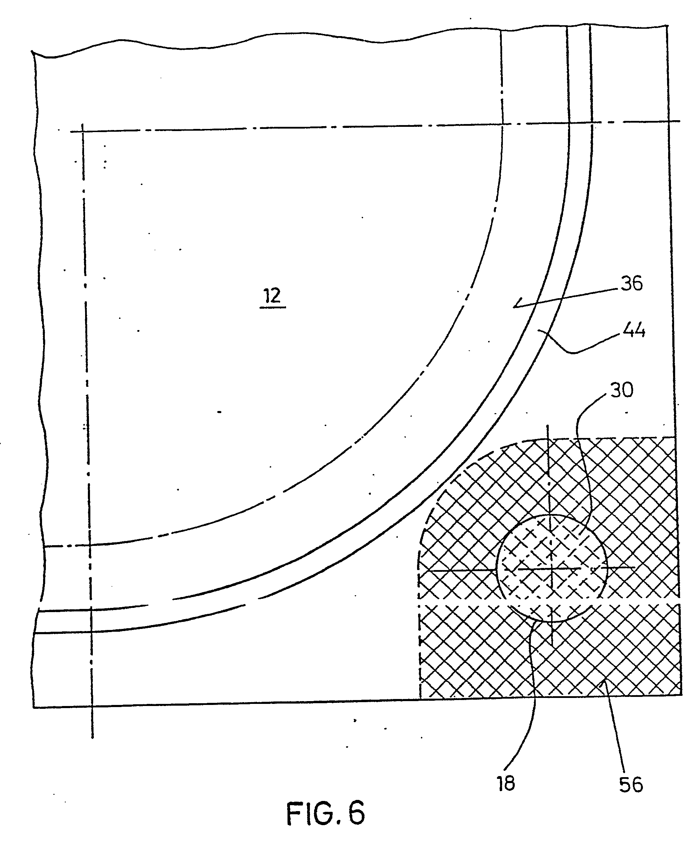

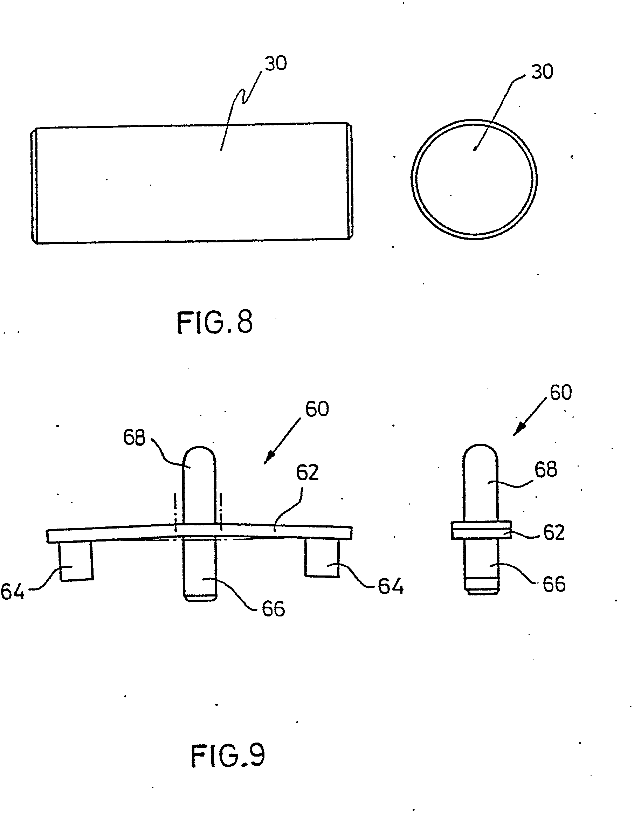

Aus der Detaildarstellung von Fig. 6 geht hervor, daß dort eine Eckeinlaufbohrung 18, die natürlich hier nicht als Einlauf dient, mittels eines Dübels 30 verschlossen und daraufhin der kreuzschraffiert gezeichnete Eckbereich 56 verschweißt worden ist. Die Verschweißung eines oder mehrerer Eckbereiche 56 kann beispielsweise durch Widerstandsschweißung (mit eingelegtem Kupferdraht oder dergleichen) erfolgen, wobei bedarfsweise noch zusätzliche Halteelemente verwendet werden können, wie diese anhand von Fig. 9 noch im einzelnen erläutert werden, obwohl die dort gezeigten Halteeinrichtungen auch ohne jedwede Verschweißung der einzelnen Membranfilterplattenelemente verwendbar sind.

Aus dem Ausführungsbeispiel von Fig. 7 geht zunächst einmal hervor, daß dort im Randbereich 16 der Trägerplatte 20 bzw. in den Dichtrandrahmen 28 jeweils an der äußeren Randfläche Bohrungen 58, 60 vorgesehen sind, die in Verbindung mit den anhand von Fig. 9 noch zu erläuternden Halteeinrichtungen verwendet werden. Insbesondere läßt Fig. 7 aber die Art der erfindungsgemäß erzielten Membranbewegung erkennen:

Wie aus Fig. 7, links, hervorgeht, in welcher die Membran 14 in derjenigen Stellung gezeigt ist, die sie in der sogenannten Filtrationsphase einnimmt, wobei sie also, bei gegen Null gehendem Membrankammervolumen, dicht an der Trägerplatte 20 anliegt, liegt die Membran 14 dabei derart an der Anlagefläche 36 im Übergangsbreich zwischen Dichtrandrahmen 28 und Zentralbereich der Trägerplatte 20 an, daß sie nur um die Sollbiegelinie 42 gekrümmt ist, ehe sie dann sanft in den Zentralbereich der Membranfilterplatte übergeht. In Fig. 7, rechts, hingegen, in der sogenannten Abpressphase, ist die Membrankammer 48 mit Druck beaufschlagt, und zwar dort bei fehlerhafter Bedienung, ohne daß also die Filterkammer mit zu filterndem Medium beaufschlagt wäre, wodurch die Auslenkung der Membran 14 nach rechts ihren theoretischen Maximalwert annimmt: Es ist deutlich erkennbar, daß die Abbiegung der Membran 14 hierbei ausschließlich um die Sollbiegelinie 40 erfolgt, während die Sollbiegelinie 42 im wesentlichen unbeansprucht bleibt. Durch die erfindungsgemäß vorgesehene Formgebung der Anlagefläche 36 wird also gleichsam eine Kombinätion von zwei "Scharnieren" geschaffen, die durch die Sollbiegelinien 40 bzw. 42 gebildet werden, wodurch die Beanspruchung der Membran 14 sowohl in dem in Fig. 7 links gezeigten korrekten Betrieb, also bei normalem Membranhub, als auch bei fehlerhafter Bedienung, wie in Fig. 7 rechts gezeigt, weitestgehend geschont und vor Uberbeanspruchungen bewahrt wird.

Fig. 8 zeigt einen der bereits genannten Dübel 30, die, wie dargestellt, nahe ihren Enden konisch zulaufend ausgebildet sein können, um so das Eintreiben in Eckeinlaufbohrungen 18 der beschriebenen Art zu erleichtern. Die Dübel 30 verlaufen also in eingebautem Zustand stets senkrecht zur Trägerplattenmittelebene 22 und dienen dazu, entweder, bei Schweißverbindungen, die in dem jeweiligen Schweißbereich (wie 56) vorgesehenen Eckeinlaufbohrungen 18 zu verschließen oder aber entsprechend ihrem Klemmsitz, der beispielsweise verwendet werden kann, innerhalb der Eckeinlaufbohrungen 18 die Einzelemente der Membranfilterplatte gegen parallel zur Trägerplattenmittelebene, also radial, wirkende Kräfte zu sichern. Bei geeigneter Verbindung mit dem sie umgebenden Material, beispielsweise durch Schweißen, Kleben, durch starken Klemmsitz oder durch Verschraubung, können die Dübel 30 natürlich auch senkrecht zur Trägerplattenmittelebene 22 wirkende Kräfte aufnehmen.

Zum Zusammenhalten der Membranfilterplattenelemente gegen derartige senkrecht zur Trägerplattenmittelebene 22 wirkenden Kräfte dienen jedoch im wesentlichen Halteklammern 60 der in Fig. 9 gezeigten Art. Wie dort erkennbar ist, weist die Halteklammer 60 einen Steg 12 sowie an der in Fig. 9 unten liegenden Seite zwei Rahmenzapfen 64 und einen zentralen Plattenzapfen 66 auf. Die Rahmenzapfen 64 bzw. der Plattenzapfen 66 werden in die in Fig. 7 dargestellten Bohrungen 58, 60 der Dichtrandrahmen 28 bzw. des Randbereiches 16 der Trägerplatte 20 eingesetzt, wobei die Verbindung auch hier mit Klemmsitz, durch Verschweißen etc., wie weiter oben in Verbindung mit den Dübeln 30 dargelegt, erfolgen kann. An der dem Plattenzapfen 66 gegenüberliegenden Seite des Steges 62 ist ein an seinem freien Ende abgerundeter Haltezapfen 68 angeordnet, der zum Einhängen des Filtertuches 26 dient. Rings um die Membranfilterplatte ist eine Vielzahl derartiger Halteklammern 60 vorgeseheñ, so daß nicht nur ein zuverlässiges Zusammenhalten der Membranfilterplattenelemente gegen senkrecht zur Trägerplattenmittelebene 22 wirkende Kräfte gewährleistet ist, sondern auch die Filtertücher 26 in hinreichender Weise mittels der abgerundeten Haltezapfen 68 befestigt werden können. Die Halteklammer 60 kann vorzugsweise aus Kunststoff hergestellt sein, jedoch sind auch andere Materialien, wie Metall, möglich. Der Steg 62 ist im übrigen vorzugsweise, wie aus Fig. 9 ersichtlich, leicht gewinkelt ausgebildet, um so eine innere Spannung der Halteklammer 60 zu erzielen, die den gegebenenfalls erwünschten Klemmsitz der Zapfen 64, 66 in den Bohrungen 58, 60 fördert.

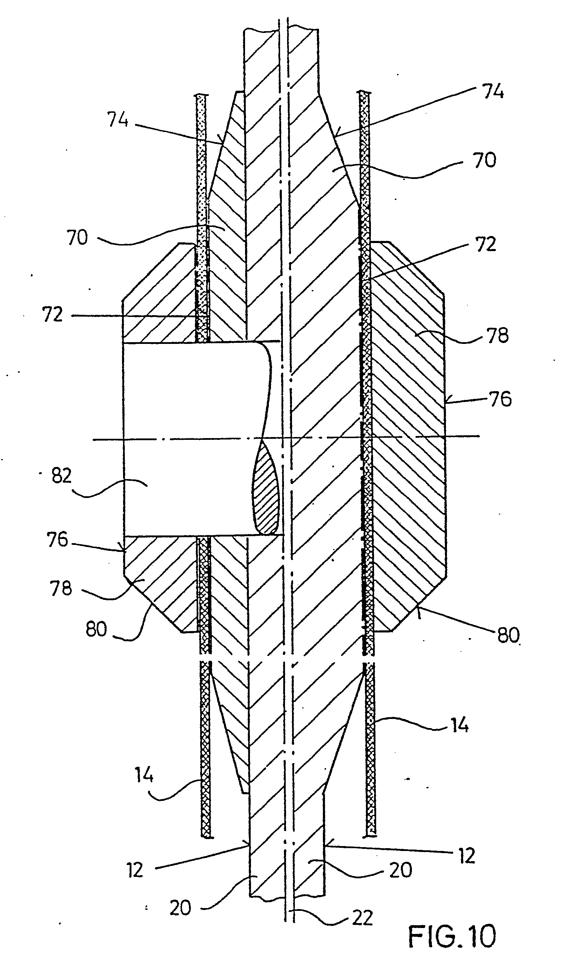

Fig. 10 zeigt zwei Ausführungsbeispiele eines gegebenenfalls bei der erfindungsgemäßen Membranfilterplatte vorhandenen Stütznockens. Jeder der Stütznocken weist ein von der Trägerplattenfläche 12 im wesentlichen bis zur Ebene der Membran 14 in deren unbelasteter Normalstellung vorspringendes Basisteil 70 auf, welches bei der Ausführungsform gemäß Fig. 10, rechts, einstückig mit der eigentlichen Trägerplatte 20 ausgebildet ist, während es sich bei dem Ausführungsbeispiel von Fig. 10, links, um ein separates Basisteil 70 handelt. Das Basisteil 70 weist jeweils eine parallel zur Trägerplattenmittelebene 22 verlaufende Stirnfläche 72 und eine von dieser schräg zur Trägerplattenfläche 12 verlaufende Übergangsfläche 74 auf. Weiterhin weist der Stütznocken ein im wesentlichen von der Ebene der Membran 14 in deren unbelasteter Normalstellung bis zu einer Stützfläche 76 vorstehendes Stützteil 78 auf, von dessen im wesentlichen ebener Stützfläche 76 aus eine ebenfalls schräge Übergangsfläche 80 in Richtung auf die Membran 14 verläuft. Sowohl die Übergangsfläche 74 des Basisteils 70 als auch die Übergangsfläche 80 des Stützteiles 78 sind dabei nahe ihrem der Stirnfläche 72 bzw. der Stützfläche 76 abgewandten Ende stufenförmig abgesetzt.

Das Basisteil 70 und/oder das Stützteil 78 können mit der Trägerplatte 20 unter Einschluß der Membran 14 auf verschiedene Weise verbunden, beispielsweise verschweißt, verschraubt oder verdübelt sein, wobei wegen der Einzelheitenauf die Darlegungen weiter oben hinsichtlich der Dübel 30 verwiesen sei. In Fig. 10, links, ist jedenfalls eine Zentralschraube 82 gezeigt, die gegebenenfalls in ein Innengewinde der entsprechenden Bohrung der Trägerplatte 20 eingeschraubt sein könnte. Es könnte natürlich aber auch eine die Gesamtanordnung senkrecht zur Trägerplattenmittelebene 22 durchsetzende Bohrung vorgesehen sein, in welche die Schraube 82 eingeschraubt wäre, gegebenenfalls unter Verwendung einer nicht gezeigten Kontermutter.

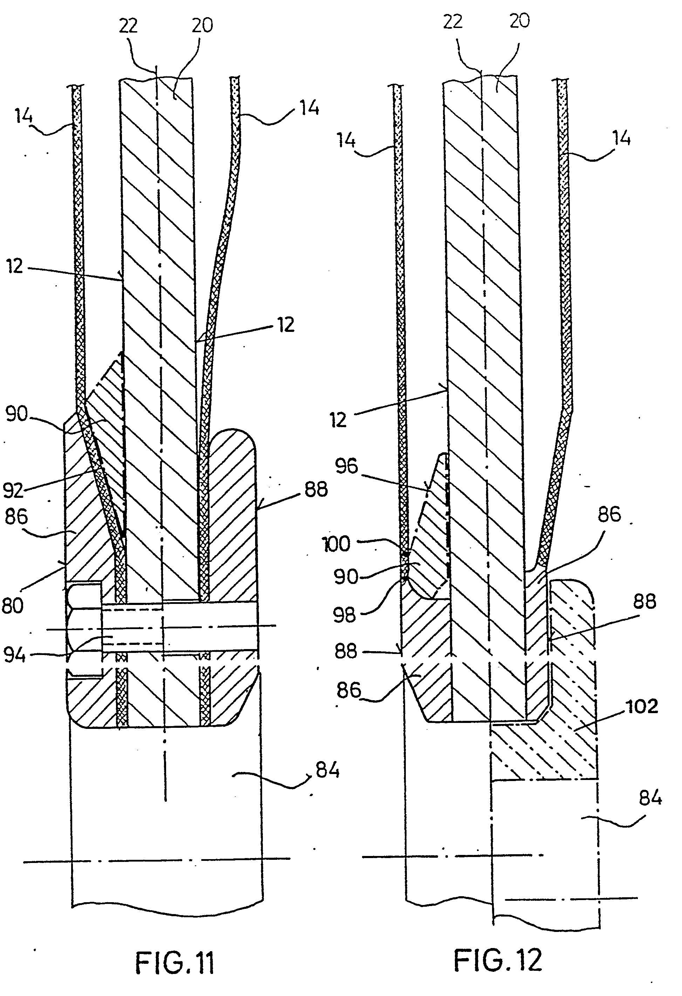

In Fig. 11 und 12 sind verschiedene Ausführungsbeispiele des Zentralbereiches einer Membranfilterplatte mit zentralem Filtrationseinlauf wiedergegeben. Die Membran 14 ist dabei in dem die Zentraleinlaufbohrumg 84 umgebenden Dichtungsbereich über ein ringförmiges Haltestück 86, dessen verschiedene Ausführungsformen noch näher zu erläutern sein werden, dichtend mit der Trägerplatte 20 verbunden. Die der Trägerplatte 20 abgewandte Stirnfläche 88 der verschiedenen Haltestücke 86 hat dabei jeweils von der Trägerplattenfläche 12 einen geringeren Abstand als die der Trägerplattenmittelebene 22 parallele Umfangsfläche 34 des Dichtrandrahmens bzw. der Dichtrandrahmen 28.

Bei dem in Fig. 11 ganz links gezeigten Ausführungsbeispiel ist die Zentraleinlaufbohrung 84 mit Abstand von einem Stützring 90 umgeben, dessen Innendurchmesser größer ist als der Durchmesser der Zentraleinlaufbohrung 84. Der Stützring 90 weist bei dem Ausführungsbeispiel von Fig. 11, links, eine von der Ebene der Membran 14 in deren unbelasteter Normalstellung in Richtung auf die Zentraleinlaufbohrung 84 im wesentlichen schräg bis zur Trägerplattenfläche 12 verlaufende Schmiegefläche 92 auf, wobei das Haltestück 86 bei dem in Fig. 11 links gezeigten Ausführungsbeispiel in dem der Schmiegefläche 92 entsprechenden Bereich komplementär zu dieser ausgebildet ist, so daß also die Membran 14 zwischen dem Haltestück 86 und dem Stützring 90 klemmend gehalten ist.

In hiervon abgewandelter Form ist das Haltestück 86 bei dem Ausführungsbeispiel von Fig. 11, rechts, an seinem der Zentraleinlaufbohrung 84 abgewandten Rand abgerundet ausgebildet, wobei hier die Membran 14 ohne Zwischenschaltung eines Stützringes oder dergleichen unmittelbar in den Dichtspalt zwischen dem Raltestück 86 und der Trägerplattenfläche 12 einläuft. Die beiden Haltestücke 86 sind im übrigen bei dem in Fig. 11 gezeigten Ausführungsbeispiel durch eine Schraube 94, die entweder mit einer entsprechenden Innenbohrung oder aber einer Gegenmutter oder Gegenhülse zusammenwirkt, fest miteinander verbunden. Es kann auch eine Gesamtverschraubung vorgesehen sein, wie sie in Figur 12 gezeigt ist.

Haltestück 86 und/oder Stützring 90 können im übrigen mit der Trägerplatte 22 und/oder der Membran in einer der bereits beschriebenen Weisen verschweißt, verklebt oder verdübelt sein. Dies gilt auch für das in Fig. 12, links gezeigte Ausführungsbeispiel des Zentraleinlaufes, bei dem die Membran 14 einstückig mit dem Haltestück 86 ausgebildet ist. An der Trägerplatte 20 liegt dabei auch hier ein Stützring 90 an, wobei dieser aber in ähnlicher Weise wie der weiter oben beschriebene Dichtrandrahmen 28 so ausgebildet ist, daß die der Membran zugewandte Stirnfläche 96 des Stützringes 90 von dessen Innenkante aus zur Erzeugung zweier Sollbiegelinien 98, 100 zunächst im wesentlichen parallel zur Trägerplattenmittelebene 22, dann schräg auf diese hin verlaufend und abschließend abgestuft zur Trägerplattenfläche 12 ausgebildet ist. Hierdurch wird bei einer Druckbelastung der Membran 14 die bereits weiter oben in Zusammenhang mit dem Dichtrandrahmen 28 im einzelnen erörterte Doppelscharnierwirkung erzielt.

Bei dem in Fig. 12, rechts, gezeigten Ausführungsbeispiel ist die Membran 14 ebenfalls einstückig mit dem Haltestück 86 ausgebildet, jedoch ist dieses dabei so dünn, daß keine untunliche Biegebeanspruchung der Membran 14 zu besorgen ist, so daß hier auf den Stützring verzichtet werden kann. Fig. 12 zeigt rechts weiterhin noch einen die Zentraleinlaufbohrung 84 durchsetzenden Klemmring 102 zum Zusammenhalten der Haltestücke 86 und der Trägerplatte 20, der natürlich auch bei den anderen gezeigten Ausführungsbeispielen des Zentraleinlaufes vorgesehen sein kann.

Die Einzelteile der vorstehend beschriebenen Membranfilterplatte können bei allen Ausführungsbeispielen zumindest teilweise aus Kunststoff bestehen, wobei es von besonderem Vorteil ist, daß die Materialeigenschaften jedes Einzelteiles in Abhängigkeit von den jeweiligen Anforderungen optimiert werden können. So kann insbesondere die Membran aus selbstdichtendem Material, beispielsweise aus Gummi, bestehen und ist darüber hinaus auswechselbar, wodurch sich eine weite Variationsbreite in den Anwendungsmöglichkeiten der erfindungsgemäßen Membranfilterplatte ergibt.

**Patentansprüche**

1. Membranfilterplatte für eine Filterpresse, mit einer Trägerplatte (20), wenigstens einer an einer Seite der Trägerplatte angeordnet Membran (14), die vorzugsweise mit Distanznocken (24) oder dergleichen versehen ist, zum Auflegen eines Filtertuches (26) oder dergleichen, und einem die Trägerplatte (20) und die Membran (14) umgebenden, diser im wesentlichen fließmitteldicht miteinander verbinden Dichtrand, dessen der Trägerplattenmittelebene (22) parallele Umfangsfläche (n) (34) auf die Membran (14) aufweisenden Seite bzw. beidseits der Trägerplatte (20) mit Abstand von der Membranebene in deren unbelasteter Normalstellung angeordnet ist bzw. sind, wobei die der Membran (14) zugewandt Anlangefläche (36) der Trägerplatte (20) in einem zwischen der Verbindungslinie (38) der Membran (14) mit dem Dichtrand und dem Zentralbereich der Trägerplatte, in dem sie sich parallel zur Trägerplattenmittelebene erstreckt, gelegenen Übergangsbereich auf die Trägerplattenmittelebene (22) hin schräg verläuft, dadurch gekennzeichnet, daß die der Membran (14) zugewandte Anlagefläche (36) der Trägerplatte (20) von der Verbindungslinie (38) der Membran (14) mit dem Dichtrand aus zur Erzeugung je einer Sollbiegelinie (40, 42) für die Filtrations- bzw. die Abpressphase zunächst im wesentlichen parallel zur Trägerplattenmittelebene (22), dann schräg in einem Winkel von 3 bis 15°, vorzugsweise 5 bis 10°, auf diese hin verlaufend und alsdann über im wesentlichen den gesamten Zentralbereich der Trägerplatte (20) parallel zur Trägerplattenmittelebene (22) sich erstreckend ausgebildet ist.

2. Membranfilterplatte nach Anspruch 1, dadurch gekennzeichnet, daß die der Trägerplattenmittelebene (22) parallele Umfangsfläche (34) des Dichtrandes in Richtung auf das Zentrum der Membranfilterplatte hin an eine schräg in Richtung auf die Trägerplattenmittelebene (22) zu verlaufende Übergangsfläche (44) anschließt, die mit einer Stufe (46) zur Verbindungslinie (40) der Membran (14) mit dem Dichtrand abfällt.

3. Membranfilterplatte nach Anspruch 1 oder 2, dadurch gekennzeichnet, daß die Neigung der Übergangsfläche (44) zur Trägerplattenmittelebene (22) größer ist als diejenige des angeschrägten Bereiches der Anlagefläche (36).

4. Membranfilterplatte nach Anspruch 2 oder 3, dadurch gekennzeichnet, daß die Höhe der Stufe (46) im wesentlichen derjenigen der Distanznocken (24) entspricht.

5. Membranfilterplatte nach einem der vorangehenden Ansprüche, dadurch gekennzeichnet, daß der Dichtrand wenigstens auf einer Seite der Trägerplattenmittelebene (22) einen Dichtrandrahmen (28) aufweist, zwischem dem und der sich bis zursenkrecht zur Trägerplattenmittelebene (22) verlaufenden Randfläche des zur Trägerplattenmittelebene parallelen Randbereiches (16) der Membranfilterplatte (10) erstreckenden Trägerplattenfläche (12) die Membran (14) dichtend aufgenommen ist.

6. Membranfilterplatte nach Anspruch 5 dadurch gekennzeichnet, daß die Trennebene zwischen dem Dichtrandrahmen (28) und der Trägerplattenfläche (12) im Randbereich (18) der Trägerplatte (20) im wesentlichen in der Ebene der Membran (14) in deren unbelasteter Normalstellung liegt.

7. Membranfilterplatte nach Anspruch 5 oder 6, dadurch gekennzeichnet, daß der Dichtrandrahmen (28) mit der Trägerplatte (20) wenigstens bereichsweise mittels in dem bzw. den Dichtrandrahmen (28), der Trägerplatte (20) und der Membran bzw. den Membranen (14) vorgesehene, senkrecht zur Trägerplattenmittelebene (22) verlaufende Bohrungen (18) durchsetzender Dübel (30) verbunden ist.

8. Membranfilterplatte nach Anspruch 7, dadurch gekennzeichnet, daß die den Dübel (30) umgebende Membranbohrung einen größeren Durchmesser hat als der Dübel (30) und in den so gebildeten, den Dübel (30) umgebenden Ringraum eine Ringdichtung (54) eingelegt ist (Fig. 5).

9. Membranfilterplatte nach einem der Ansprüche 5 bis 8, dadurch gekennzeichnet, daß die beidseitig eine Membran (14) aufweisende Trägerplatte (20) mit den beiden Dichtrandrahmen (28) durch eine Halteklammer (60) aus Kunststoff, Metall oder dergleichen verbunden ist.

10. Membranfilterplatte nach Anspruch 9, dadurch gekennzeichnet, daß die Halteklammer (80) einen senkrecht zur Trägerplattenmittelebene (22) verlaufenden Steg (62), der vorzugsweise zur Erzielung einer inneren Spannung der Hälteklammer (60) leicht gewinkelt ausgebildet ist, und zwei parallel zur Trägerplattenmittelebene (22) nach innen verlaufende Rahmenzapfen (84) aufweist, die in entsprechenden Bohrungen der Dichtrandrahmen (28) eingreifen.

11. Membranfilterplatte nach Anspruch 10, dadurch gekennzeichnet, daß die Halteklammer (80) einen zentralen, im wesentlichen in der Trägerplattenmittelebene (22) liegenden nach innen vorstehenden plattenzapfen (88) aufweist, der in eine entsprechende Bohrung des Trägerplattenrandes (16) eingreift.

12. Membranfilterplatte nach einem der Ansprüche 9 bis 11, dadurch gekennzeichnet, daß die Halteklammer (60) einen im wesentlichen in der Trägerplattenmittelebene (22) nach außen vorspringenden Haltezapfen (68) zum Einhängen des Filtertuches (26) aufweist.

13. Membranfilterplatte nach einem der Ansprüche 5 bis 12, dadurch gekennzeichnet, daß die Trägerplatte (20) in ihrem dem Dichtrandrahmen (28) benachbarten Randbereich (16) eine im wesentlichen umlaufende Schweißaustriebsnut (32) aufweist.

14. Membranfilterplatte für eine Filterpresse, mit einer Trägerplatte (20), wenigstens einer an einer Seite der Trägerplatte angeordneten Membran (14), die vorzugsweise mit Distanznocken (24) oder dergleichen versehen ist, zum Auflegen eines Filtertuches (26) oder dergleichen, und einem die Trägerplatte (20) und die Membran (14) umgebenden, diese im wesentlichen fließmitteldicht miteinander verbindenden Dichtrand, dessen der Trägerplattenmittelebene (22) parallele Umfangsfläche(n) (34) auf der die Membran (14) aufweisenden Seite bzw. beidseits der Trägerplatte (20) mit Abstand von der Membranebene in deren unbelasteter Normalstellung angeordnet ist bzw. sind, insbesondere nach einem der vorangehenden Ansprüche, dadurch gekennzeichnet, daß die Trägerplatte (20) wenigstens einen, vorzugsweise kreisrunden, Stütznocken, aufweist, dessen der Trägerplattenmittelebene (22) parallele Stützflächen (76) im wesentlichen mit der der Trägerplattenmittelebene (22) parallelen Umfangsfläche (34) des Dichtrandes fluchtet und der ein von der Trägerplattenfläche (12) im wesentlichen bis zur Ebene der Membran (14) in deren umbelasteter Normalstellung vorspringendes Basisteil (70) aufweist, welches eine parallel zur Trägerplattenmittelebene (22) verlaufende Stirnfläche (72) und eine von dieser schräg zur Trägerplattenfläche (12) hin verlaufende Übergangsfläche (74) besitzt, sowie ein im wesentlichen von der Ebene der Membran (14) in der unbelasteten Normalstellung bis zu der Stützfläche (76) vorstehendes Stützteil (78) aufweist, von dessen im wesentlichen ebener Stützfläche (76) eine ebenfalls schräge Übergangsfläche (80) in Richtung auf die Membran (14) hin verläuft, wobei die der Membran (14) zugewandte Anlagefläche des Basisteiles (70) von der Kante des Stützteiles (78) aus zur Erzeugung je einer Sollbiegelinie (40, 42) für die Filtrations- bzw. die Abpressphase zunächst im Bereich der Stirnfläche (72) parallel zur Trägerplattenmittelebene (22) und dann schräg in einem Winkel von 3 bis 15°, vorzugsweise 5 bis 10°, im Bereich der Übergangsfläche (74) auf die Trägerplattenmittelebene (22) hin verlaufend ausgebildet ist.

15. Membranfilterplatte nach Anspruch 14, dadurch gekennzeichnet, daß die Übergangsfläche (74) des Basisteiles (70) und/oder die Übergangsfläche (80) des Stützteiles (78) an ihrem der Stirnfläche (72) bzw.

Stützfläche (76) abgewandten Ende stufenförmig abgesetzt ist.

16. Membranfilterplatte für eine Filterpresse mit einer Trägerplatte (20), wenigstens einer an einer Seite der Trägerplatte (20) angeordneten Membran (14), die vorzugsweise mit Distanznocken (24) oder dergleichen versehen ist, zum Auflegen eines Filtertuches (26) odre dergleichen und einem die Trägerplatte (20) und die Membran (14) umgebenden, diese im wesentlichen fließmitteldicht miteinander verbindenden Dichtrand, dessen der Trägerplattenmittelebene (22) parallele Umfangsflächen(n) (34) auf der die Membran (14) aufweisenden Seite bzw. beidseits der Trägerplatte (20) mit Abstand von der Membranebene in deren unbelasteter Normalstellung angeordnet ist bzw. sind, insbesondere nach einem der vorangehenden Ansprüche, dadurch gekennzeichnet, daß ein Zentraleinlauf vorgesehen ist, daß die Membran (14) in dem die Zentraleinlaufbohrung (84) umgebenden Dichtungsbereich über ein ringförmiges Haltestück (86) dichtend mit der Trägerplatte (20) abgewandte Stirnfläche (88) von der Trägerplattenfläche (12) einen geringeren Abstand hat als die der Trägerplattenmittelebene (22) parallele(n) Umfangsfläche(n) (34) des Dichtrandes, daß die Zentraleinlaufbohrung (84) von einem an der Trägerplattenfläche (12) anliegenden Stützring (90) umgeben ist, dessen Innendurchmesser größer ist als der Durchmesser der Zentraleinlaufbohrung und an dem die Membran (14) anliegt, und daß die der Membran (14) zugewandte Stirnfläche (96) des Stützringes (90) von dessen der Zentraleinlaufbohrung (84) zugewandten Innenkante aus zur Erzeugung zweier Sollbiegelinien (98, 100) der Membran zunächst im wesentlichen parallel zur Trägerplattenmittelebene (22), dann schräg unter einem Winkel von 3 bis 15°, vorzugsweise 5 bis 10°, auf diese hin verlaufend und anschließend abgestuft zur Trägerplattenfläche (12) hin ausgebildet ist.

17. Membranfilterplatte nach Anspruch 16, dadurch gekennzeichnet, daß das Haltestück (86) an seinem der Zentraleinlaufbohrung (84) abgewandten Rand abgerundet ausgebildet ist.

18. Membranfilterplatte nach Anspruch 16 oder 17, gekennzeichnet durch einen die Zentraleinlaufbohrung (84) durchsetzenden Klemmring (102) zum Zusammenhalten von Haltestück(en) (86) und Trägerplatte (20).

19. Membranfilterplatte nach einem der vorangehenden Ansprüche, dadurch gekennzeichnet, daß bei im wesentlichen viereckiger Ausbildung von Dichtrand und Trägerplatte (20) der Übergang zwischen den Schmalseiten der Membran (14) jeweils durch einen Viertelkreis gebildet ist.

20. Membranfilterplatte nach einem der vorangehenden Ansprüche, dadurch gekennzeichnet, daß der Abstand der Membran (14) von der Trägerplattenfläche (12) ca. 1/3 des Abstandes der zur Trägerplattenmittelebene (22) parallelen Umfangsfläche (34) des Dichtrandes (28) beträgt.

## Claims

1. A membrane filter plate for a filter press, comprising a carrier plate (20), at least one membrane (14) which is disposed on one side of the carrier plate and which is preferably provided with spacer lugs (24) or the like, to support a filter cloth (26) or the like, and a sealing edge which surrounds the carrier plate (20) and the membrane (14) and which interconnects them so that they are substantially sealed with respect to the flow medium, the sealing edge peripheral surface or surfaces (34) parallel to the carrier plate centre-line (22) being spaced from the membrane plane in the unstressed normal position thereof, on both sides of the carrier plate (20) or on that side thereof which has the membrane (14), the abutment surface (36) of the carrier plate (20) which faces the membrane (14) extending at an angle towards the carrier plate centre-line (22) in a transition zone situated between the line (38) connecting the membrane (14) to the sealing edge and the central zone of the carrier plate in which it extends parallel to the carrier plate centre-line, characterised in that in order to form a required bending line (40, 42) in each case for the filtration phase and for the pressing-off phase, the abutment surface (36) of the carrier plate (20) facing the membrane (14) initially extends from the line (38) connecting the membrane (14) to the sealing edge substantially parallel to the carrier plate centre-line (22), then at an angle of 3 to 15%, preferably 5 to 10%, towards said centre-line and then parallel to the carrier plate centre-line (22) over substantially the entire central zone of the carrier plate (20).

2. A membrane filter plate according to claim 1, characterised in that in the direction of the centre of the membrane filter plate the sealing edge peripheral surface (34) parallel to the carrier plate centre-line (22) adjoins a transition surface (44) extending at an angle to the carrier plate centre-line (22), said transition surface (44) descending by a step (46) to the line (40) connecting the membrane (14) to the sealing edge.

3. A membrane filter plate according to claim 1 or 2, characterised in that the inclination of the transition surface (44) to the carrier plate centre-line (22) is greater than that of the angled zone of the abutment surface (36).

4. A membrane filter plate according to claim 2 or 3, characterised in that the height of the step (46) corresponds substantially to that of the spacer lugs (24).

5. A membrane filter plate according to any one of the preceding claims, characterised in that at least on one side of the carrier plate centre-line (22) the sealing edge has a sealing edge frame (28), the membrane (14) being received in sealing-tight relationship between said frame and the carrier plate surface (12) which extends as far as the edge surface of the edge zone (16) of the membrane filter plate (10) parallel to the carrier plate centre-line, said edge surface extending perpendicularly to the carrier plate centre-line (22).

6. A membrane filter plate according to claim 5, characterised in that the parting line between the sealing edge frame (28) and the carrier plate surface (12) in the edge zone (16) of the carrier plate (20) lies substantially in the plane of the membrane (14) in its unstressed normal position.

7. A membrane filter plate according to claim 5 or 6, characterised in that the sealing edge frame (28) is connected to the carrier plate (20) at least zone-wise by means of pins (30) passing through bores (18) extending in the or each sealing edge frame (28), the carrier plate (20) and the membrane or membranes (14), said bores extending perpendicularly to the carrier plate centre-line (22).

8. A membrane filter plate according to claim 7, characterised in that the membrane bore surrounding the pin (30) is of larger diameter than the pin (30) and an annular seal (54) is inserted in the resulting annular space surrounding the pin (30) (Fig. 5).

9. A membrane filter plate according to any one of claims 5 to 8, characterised in that the carrier plate (20) having a membrane (14) on both sides is connected to the two sealing edge frames (20) by a retaining clip (60) made of plastics, metal or the like.

10. A membrane filter plate according to claim 9, characterised in that the retaining clip (60) has a web (62) extending perpendicularly to the carrier plate centre-line (22), said web preferably being slightly bent to give an internal tension for the retaining clip (60), and two frame pins (64) which extend inwardly parallel to the carrier plate centre-line (22) and which engage in corresponding bores in the sealing edge frames (28).

11. A membrane filter plate according to claim 10, characterised in that the retaining clip (60) has a central inwardly projecting plate pin (66) situated substantially on the carrier plate centre-line (22) and engaging in a corresponding bore of the carrier plate edge (16).

12. A membrane filter plate according to any one of claims 9 to 11, characterised in that the retaining clip (60) has a retaining pin (68) which projects substantially outwards on the carrier plate centre-line (22), for engagement with the filter cloth (26).

13. A membrane filter plate according to any one of claims 5 to 12, characterised in that the edge zone (16) of the carrier plate (20) adjacent the sealing edge frame (28) has a substantially continous sweat expulsion groove (32).

14. A membrane filter plate for a filter press, comprising a carrier plate (20), at least one membrane (14) which is disposed on one side of the carrier plate and which is preferably provided with spacer lugs (24) or the like, to support a filter cloth (26) or the like, and a sealing edge which surrounds the carrier plate (20) and the membrane (14) and which interconnects them so that they are substantially sealed with respect to the flow medium, the sealing edge peripheral surface or surfaces (34) parallel to the carrier plate centre-line (22) being spaced from the membrane plane in the unstressed normal position thereof, on both sides of the carrier plate (20) or on that side thereof which has the membrane (14), more particularly according to any one of the preceding claims, characterised in that the carrier plate (20) has at least one preferably circular supporting lug, whose supporting surfaces (76) parallel to the carrier plate centre-line (22) are substantially in line with the sealing edge peripheral surface (34) parallel to the carrier plate centre-line (22) and which has a base part (70) which projects from the carrier plate surface (12) substantially as far as the plane of the membrane (14) in its unstressed normal position, which base part has an end face (72) extending parallel to the carrier plate centre-line (22) and a transition surface (74) extending at an angle to the carrier plate surface (12) therefrom, and a support part (78) which projects substantially from the plane of the membrane (14) in the unstressed normal position as far as the support surface (76), a likewise inclined transition surface (80) extending from the substantially flat support surface (76) of said support part (78) in the direction of the membrane (14), the abutment surface of the base part (70) which faces the membrane (14) extending from the edge of the support part (78) first parallel to the carrier plate centre-line (22) in the area of the end face (72) and then at an angle of 3 to 15°, preferably 5 to 10°, in the region of the transition surface (74) towards the carrier plate centre-line (22), in order to form a required bending line (40, 42) for the filtration phase and for the pressing-off phase.

15. A membrane filter plate according to claim 14, characterised in that the transition surface (74) of the base part (70) and/or the transition surface (80) of the support part (78) is/are stepped at the end remote from the end face (72) or support surface (76).

16. A membrane filter plate for a filter press, comprising a carrier plate (20), at least one membrane (14) which is disposed on one side of the carrier plate and which is preferably provided with spacer lugs (24) or the like, to support a filter cloth (26) or the like, and a sealing edge which surrounds the carrier plate (20) and the membrane (14) and which interconnects them so that they are substantially sealed with respect to the flow medium, the sealing edge peripheral surface or surfaces (34) parallel to the carrier plate centre-line (22) being spaced from the membrane plane in the unstressed normal position thereof, on both sides of the carrier plate (20) or on that side thereof which has the membrane (14), more particularly according to any one of the preceding claims, characterised in that a central inlet is provided, the membrane (14) in the sealing area surrounding the central inlet bore (84) is sealingly connected to the carrier plate (20) via an annular retaining member (86), that end face (88) of the carrier plate surface (12) which is remote from the carrier plate (20) being spaced from said surface (12) by a smaller amount than the sealing edge peripheral surface(s) (34) parallel to the carrier plate centre-line (22), the central inlet bore (84) is surrounded by a support ring (90) abutting the carrier plate surface (12), the support ring inside diameter being larger than the diameter of the central inlet bore, the membrane (14) abutting said ring (90), and in order to form two required bending lines (98, 100) for the membrane the end face (96) of the support ring (90) facing the membrane (14) extends from its inner edge facing the central inlet bore (84) first substantially parallel to the carrier plate centre-line (22), then at an angle of 3 to 15°, preferably 5 to 10°, towards said centre line, and then is stepped towards the carrier plate surface (12).

17. A membrane filter plate according to claim 16, characterised in that the retaining member (86) is rounded at its edge remote from the central inlet bore (84).

18. A membrane filter plate according to claim 16 or 17, characterised by a clamp ring (102) extending through the central inlet bore (84) to retain the or each retaining member (86) and carrier plate (20).

19. A membrane filter plate according to any one of the preceding claims, characterised in that given a substantially square construction of the sealing edge and carrier plate (20) the transition between the narrow sides of the membrane (14) is in each case formed by a quadrant.

20. A membrane filter plate according to any one of the preceding claims, characterised in that the distance of the membrane (14) from the carrier plate surface (12) is about one-third of the distance of the peripheral surface (34) of the sealing edge (28) parallel to the carrier plate centre-line (22).

## Revendications

1.- Plaque filtrante à membrane(s) pour filtre-presse, comportant une plaque support (20) au moins une membrane (14) placée sur un côté de cette plaque support et de préférence pourvue de saillies d'écartement (24) ou d'éléments semblables pour l'appui d'une toile filtrante (26) ou d'un élement semblable, et un bord d'etanchéité entourant la plaque support (20) et la membrane (14), réunissant celles-ci de manière sensiblement étanche aux fluides et dont le ou les surface(s) périphérique(s) (34) parallèle(s) au plan médian (22) de la plaque support est ou sont placée(s) sur le côté dirigé vers la membrane (14) ou des deux côtés de la plaque support (20) à une certaine distance du plan de la membrane en position normale non chargée, la surface d'appui (36) dirigée vers la membrane (14) de la plaque support (20), dans une zone de raccordement située entre la ligne de jonction (38) de la membrane (14) au bord d'étanchéité et la zone centrale de la plaque support dans laquelle elle s'étend parallèlement au plan médian de la plaque support, s'étendant obliquement vers ce plan médian (22), caractérisée par le fait que la surface d'appui (36) dirigée vers la membrane (14) de la plaque support (20), à partir de la ligne de jonction (38) de la membrane (14) au bord d'étanchéité, pour la production de deux lignes de pliage (40, 42), l'une pour la phase de filtration et l'autre pour la phase d'extraction, s'étend d'abord sensiblement parallèlement au plan médian (22) de la plaque support, puis obliquement vers ce plan en faisant avec lui un angle de 3 à 15°, de préférence de 5 à 10°, et ensuite, dans sensiblement toute la zone centrale de la plaque support (20), parallèlement audit plan médian (22).

2.- Plaque filtrante à membrane(s) selon la revendication 1, caractérisée par le fait que la surface périphérique (34), parallèle au plan médian (22) de la plaque support, du bord d'étanchéite, vers le centre de la plaque filtrante à membrane(s), se joint à une surface de raccordement (44) qui s'étend obliquement vers le plan médian (22) de la plaque support et tombe par un gradin (46) vers la ligne de jonction (38) de la membrane (14) au bord d'étanchéite.

3.- Plaque filtrante à membrane(s) selon l'une des revendications 1 et 2, caractérisée par le fait que l'inclinaison de la surface de raccordement (44) sur le plan médian (22) de la plaque support est plus grande que celle de le partie oblique de la surface d'appui (36).

4.- Plaque filtrante à membrane(s) selon l'une des revendications 2 et 3, caractérisée par le fait que la hauteur du gradin (46) correspond sensiblement à celle des saillies d'écartement (24).

5.- Plaque filtrante à membrane(s) selon l'une des revendications précédentes, caractérisée par le fait que le bord d'étanchéité, au moins sur un côté du plan médian (22) de la plaque support, possède un cadre (28), et la membrane (14) est montée de manière étanche entre ce cadre (28) et la surface (12) de le plaque support s'etendent jusqu'à la surface de bordure, perpendiculaire au plan médian (22) de la plaque support, de la zone de bordure (16), parallèle audit plan médian, de la plaque filtrante à membrane(s) (10).

6.- Plaque filtrante à membrane(s) selon le revendication 5, caractérisée par le fait que le plan de séparation du cadre de bord d'étanchéité (25) et de la surface (12) de la plaque support (20), dans la zone de bordure (16) de la plaque support, est sensiblement dans la plan de la membrane (14) en position normale non chargée.

7.- Plaque filtrante à membrane(s) selon l'une des revendications 5 et 6, caractérisée per le fait que la cadre de bord d'étanchéité (28) est réuni, au moins par endroits, à la plaque support (20) par des goujons (30) passant par des trous (18) s'étendant perpendiculairement au plan médian (22) de la plaque support prévus dans le ou les cadre(s) de bord d'étanchéité (28), la plaque support (20) et le ou les membrane(s) (14).

8.- Plaque filtrante à membrane(s) selon la revendication 7, caractérisée par le fait que le trou de la membrane entourant le goujon (30) a un plus grand diamètre que le goujon (30), et, dans l'espace annulaire entourant le goujon (30) ainsi formé, est place un joint annulaire d'étanchéité (54) (figure 5).

9.- Plaque filtrante à membrane(s) selon l'une des revendications 5 à 8, caractérisée par le fait que le plaque support (20), possédant une membrane (14) de chaque côté, est réunie aux deux cadres de bord d'étanchéite (28) par une agrafe (60) en matière plastique, métal ou matière analogue.

10.- Plaque filtrante à membrane(s) selon la revendication 9, caractérisée par le fait que l'agrafe (60) presénte une âme (62) s'étendant perpendiculairement au plan médian (22) de la plaque support et de préférence légèrement coudée pour l'obtention d'une tension interne de l'agrafe (60), et deux tenons de cadre (64), s'étendant vers l'intérieur parallèlement au plan médien (22) de le plaque support, qui s'engagent dans des trous correspondants des cadres de bord d'étanchéité (28).

11.- Plaque filtrante à membrane(s) selon la revendication 10, caractérisée par le fait que l'agrafe (60) présente un tenon central de plaque (66) saillant vers l'intérieur situé sensiblement dans le plan médian (22) de le plaque support et s'engageant dans un trou correspondant du bord (16) de la plaque support.

12.- Plaque filtrante à membrane(s) selon l'une des revendications 9 à 11, caractérisée par le fait que l'agrafe (60) possède pour l'accrochage de la toile filtrante (26), un tenon (68) saillant vers l'extérieur sensiblement dans le plan médian (22) de la plaque support.

13.- Plaque filtrante à membrane(s) selon l'une des revendications 5 à 12, caractérisée par le fait que la plaque support (20) possède, dans sa zone de bordure (16) voisine du cadre de bord d'étanchéité (28), une gorge d'échappement de soudure (32) faisant sensiblement le tour.

14.- Plaque filtrante à membrane(s) pour filtre-presse, comportant une plaque support (20), au moins une membrane (14) placée sur un côté de cette plaque support et de préférence pourvue de saillies d'écartement (24) ou d'éléments semblables pour l'appui d'une toile filtrante (26) ou d'un élément semblable, et un bord d'étanchéité entourant la plaque support (20) et la membrane (14), réunissant celles-ci de manière sensiblement étanche aux fluides et dont la ou les surface(s) périphérique(s) (34) parallèle(s) au plan médian (22) de la plaque support est ou sont placée(s) sur le côté dirigé vers la membrane (14) ou des deux côtés de la plaque support (20) à une certaine distance du plan de la membrane en position normale non chargée, en particulier selon l'une des revendications précédentes, caractérisée par le fait que le plaque support (20) présente au moins une saillaie d'appui de préférence circulaire dont la surface d'appui (76) parallèle au plan médian (22) de la plaque support est sensiblement dans le plan de la surface périphérique (34) parallèle à ce même plan médian (22) du bord d'étanchéité et qui présente, d'une part, une partie de base (70) qui saille de la surface (12) de la plaque support sensiblement jusqu'au plan de le membrane (14) en position normale non chargée et possède une surface frontale (72) s'étendant parallèlement au plan médian (22) de la plaque support et une surface de raccordement (74) s'étendant obliquement à partir de cette surface frontale (72) vers la surface (12) de la plaque support et, d'autre part, une partie d'appui (78) qui saille sensiblement du plan de la membrane (14), en position normale non chargée, jusqu'à la surface d'appui (76) et, à partir de la surface d'appui (76), sensiblement plane, de ladite partie d'appui (78), s'étend vers la membrane (14) une surface de raccordement (80) également oblique, la surface d'appui dirigée vers la membrane (14) de la partie de base (70), à partir du bord de la partie d'appui (78), pour la production de deux lignes de pliage (40, 42), l'une pour la phase de filtration et l'autre pour la phase d'extraction, s'étendant d'abord, dans la zone de la surface frontale (72), parallèlement au plan médian (22) de la plaque support, et ensuite, dans la zone de la surface de raccordement (74), obliquement vers ledit plan médian (22) en faisant avec lui un angle de 3 à 15°, de préférence de 5 à 10°.

15.- Plaque filtrante à membrane(s) selon la revendication 14, caractérisée par le fait que la surface de raccordement (74) de la partie de base (70) et/ou la surface de raccordement (80) de la partie d'appui (78) forme un gradin à son extrémité opposée à la surface frontale (72) ou à la surface d'appui (76).

16.- Plaque filtrante à membrane(s) pour filtre-presse, comportant une plaque support (20), au moins une membrane (14) placée sur un côté de cette plaque support et de préférence pourvue de saillies d'écartement (24) ou d'éléments semblables pour l'appui d'une toile filtrante (26) ou d'un élément semblable, et un bord d'étanchéité entourant la plaque support (20) et la membrane (14), réunissant celles-ci de manière sensiblement étanche aux fluides et dont la ou les surface(s) périphérique(s) (34) parallèle(s) au plan médian (22) de la plaque support est ou sont placée(s) sur le côté dirigé vers la membrane (14) ou des deux côtés de la plaque support (20) à une certaine distance du plan de la membrane en position normale non chargée, en particulier selon l'une des revendications précédentes, caractérisée par le fait qu'il est prévu une entrée centrale, que la membrane (14), dans la zone d'étanchéité entourant le trou d'entrée central (84), est, par une pièce annulaire de fixation (86) qui assure l'étanchéité par sa surface frontale (88) opposée à la plaque support (20), à une plus faible distance de la surface (12) de la plaque support que la ou les surface(s) périphérique(s) (34) du bord d'étanchéite parallèle(s) au plan médian (22) de la plaque support, que le trou d'entrée central (84) est entouré d'une bague d'appui (90) s'appuyant sur la surface (12) de la plaque support, dont le diamètre intérieur est supérieur au diamètre du trou d'entrée central et sur laquelle s'appuie la membrane (14), et que la surface frontale (96) dirigée vers la membrane (14) de la bague d'appui (90), à partir du bord intérieur de cette dernière dirigé vers le trou d'entrée central (84), pour la production de deux lignes de pliage (98, 100) de la membrane, s'étend d'abord sensiblement parallèlement au plan médian (22) de la plaque support, puis obliquement vers ce plan en faisant avec lui un angle de 3 à 15°, de préférence de 5 à 10°, et ensuite en gradin vers la surface (12) de la plaque support.

17.- Plaque filtrante à membrane(s) selon la revendication 16, caractérisée par le fait que la pièce de fixation (86) est arrondie sur son bord opposé au trou d'entrée central (84).

18.- Plaque filtrante à membrane(s) selon l'une des revendications 16 et 17, caractérisée par une bague de serrage (102) passant par le trou d'entrée central (84) destinée à tenir ensemble la ou les pièce(s) de fixation (86) et la plaque support (20).

19.- Plaque filtrante à membrane(s) selon l'une des revendications précédentes, caractérisée par le fait que, le bord d'étanchéité et la support (20) étant, dans l'ensemble, carrés, le raccordement entre les petits côtés de la membrane (14) est formé par des quarts de cercle.

20.- Plaque filtrante à membrane (s) selon l'une des revendications précédentes, caractérisée par fait que la distance de la membrane (14) à la surface (12) de la plaque support est environ le tiers de la distance à cette surface (12) de la surface périphérique (34), parallèle au plan médian (22) de la plaque support, du bord d'étanchéité (28).

FIG.1

FIG. 2

FIG.3

FIG.4

FIG.5

12

36

44

30

18   56

FIG. 6

FIG.7

30

30

FIG.8

60

68

62

64

66

64

66

60

68

62

66

FIG.9

FIG.10

FIG.11

FIG.12